# EUROPEAN PATENT APPLICATION

(11) **EP 1 304 840 A2**
(43) Date of publication of application: **23.04.2003**
(21) Application number: 02257076.6
(22) Date of filing: 11.10.2002
(51) Int. Cl.: H04L 12/56

(54) **Managing network connections in a system**

(30) Priority: 18.10.2001 US 982643
(71) Applicant: Sun Microsystems, Inc., Santa Clara, California 95054 (US)
(72) Inventor: Taylor, Scott E, Cardiff, California 92007 (US)
(74) Representative: Harris, Ian Richard

(57) **Abstract**

The present invention provides for managing network connections to one or more domains in a processor-based system. An apparatus is provided that comprises a storage unit and a control unit. The storage unit is adapted to store a domain list and a path list, wherein the domain list comprises a domain defined in a system and the path list comprises one or more paths available for communications with the domain. The control unit is communicatively coupled to the storage unit, wherein the control unit adapted to determine an active path from the one or more available paths and to transmit data to the domain over the active path.

## Description

### BACKGROUND OF THE INVENTION

### 1. FIELD OF THE INVENTION

This invention relates generally to a processor-based system, and, more particularly, to managing network connections in the processor-based system.

### 2. DESCRIPTION OF THE RELATED ART

The last several years have witnessed an increased demand for network computing, partly due to the emergence of the Internet. Some of the notable trends in the industry include a boom in the growth of Applications Service Providers (ASPs) that provide applications to businesses over networks, and enterprises that use the Internet to distribute product data to customers, take orders, and enhance communications with employees.

Businesses typically rely on network computing to maintain a competitive advantage over other businesses. As such, developers, when designing processor-based systems for use in network-centric environments, may take several factors into consideration to meet the expectation of the customers, factors such as functionality, reliability, scalability, and performance of such systems.

One example of a processor-based system used in a network-centric environment is a mid-range server system. A single mid-range server system may, for example, be configured for a plurality of domains, where a domain, for example, may act as a separate machinery running its own instance of an operating system to perform one or more of the configured tasks.

The benefits of providing substantially independently operating domains within an integrated system become readily apparent as customers are able to perform a variety of tasks that would otherwise be reserved for several different machines. However, managing a plurality of domains within a system sometimes proves to be a challenging task, as designers seek a highly available, secure way of managing domains in the system.

### SUMMARY OF THE INVENTION

In one aspect of the instant invention, an apparatus is provided for managing network connections of one or more domains in a system. The apparatus comprises a storage unit and a control unit. The storage unit is adapted to store a domain list and a path list, wherein the domain list comprises a domain defined in the system and the path list comprises one or more paths available for communications with the domain. The control unit is communicatively coupled to the storage unit, wherein the control unit is adapted to determine an active path from the one or more available paths, and to transmit data to the domain over the active path.

In another aspect of the present invention, a method is provided for managing network connections of one or more domains in a system. The method comprises determining one or more domains defined in a processor-based system, determining one or more available paths to the one or more defined domains, determining at least one active path from the one or more available paths to each of the defined domains, and transmitting data to at least one of the defined domains over the active path.

In yet another aspect of the instant invention, an article comprising instructions is provided for managing network connections of one or more domains in a system. The instructions, when executed, enable a processor to determine a domain configured in a processor-based system, determine one or more available paths to the configured domain, determine at least one active path from the one or more available paths to the configured domains, and transmitting data to the configured domain over the active path. The instructions can be provided on one or more carrier media.

### BRIEF DESCRIPTION OF THE DRAWINGS

The invention may be understood by reference to the following description taken in conjunction with the accompanying drawings, in which like reference numerals identify like elements, and in which:
Figure 1 shows a stylized block diagram of a system in accordance with one embodiment of the present invention;
Figure 2 illustrates a block diagram of an exemplary domain configuration that may be employed in the system of Figure 1, in accordance with one embodiment of the present invention;
Figure 3 depicts a block diagram of an exemplary arrangement that may be employed in the system of Figure 1 for managing one or more of the domains shown in Figure 2, in accordance with one embodiment of the present invention;
Figure 4 illustrates an exemplary configuration of the system of Figure 1, in accordance with one embodiment of the present invention;
Figure 5 depicts a flow diagram of a method of one embodiment of the present invention;
Figure 6 illustrates a flow diagram of a method in accordance with an alternative embodiment of the present invention;
Figure 7 depicts an exemplary domain list that may be employed by the method of Figure 6, in accordance with one embodiment of the present invention; and
Figure 8 depicts an exemplary path list that may be employed by the method of Figure 6, in accordance with one embodiment of the present invention.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

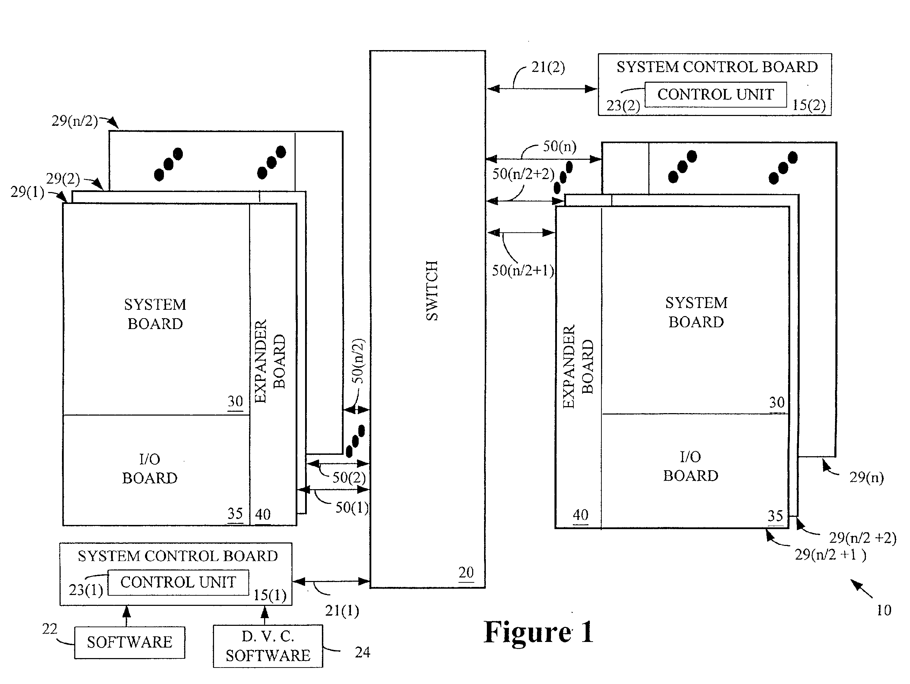

Referring now to Figure 1, a block diagram of a system 10 in accordance with one embodiment of the present invention is illustrated. The system 10, in one embodiment, includes a plurality of system control boards 15(1-2) that are coupled to a switch 20. For illustrative purposes, lines 21(1-2) are utilized to show that the system control boards 15(1-2) are coupled to the switch 20, although it should be appreciated that, in other embodiments, the system control boards 15(1-2) may be coupled to the switch 20 in any of a variety of ways, including by edge connectors, cables, or other available interfaces.

In the illustrated embodiment, the system 10 includes two system control boards 15(1-2), one for managing the overall operation of the system 10 and the other to provide redundancy and automatic failover in the event that the other system control board fails. Although not so limited, in the illustrated embodiment, the first system control board 15(1) serves as a "main" system control board, while the second system control board 15(2) serves as an alternate hot-swap replaceable system control board. In one embodiment, during any given moment, generally one of the two system control boards 15(1-2) actively controls the overall operations of the system 10.

If failures of the hardware or software occur on the main system control board 15(1) or failures on any hardware control path from the main system control board 15(1) to other system devices occur, the system controller failover software 22 automatically triggers a failover to the alternative system control board 15(2). The alternative system control board 15(2), in one embodiment, assumes the role of the main system control board 15(1) and takes over the main system controller responsibilities. To accomplish the transition from the main system control board 15(1) to the alternative system control board 15(2), it may be desirable to replicate the system controller data, configuration, and/or log files on both of the system control boards 15(1-2). The system control boards 15(1-2) in the illustrated embodiment may each include a respective control unit 23(1-2).

The system 10, in one embodiment, includes a plurality of system board sets 29(1-n) that are coupled to the switch 20, as indicated by lines 50(1-n). The system board sets 29(1-n) may be coupled to the switch 20 in one of several ways, including edge connectors or other available interfaces. The switch 20 may serve as a communications conduit for the plurality of system board sets 29(1-n), half of which may be connected on one side of the switch 20 and the other half on the opposite side of the switch 20.

The switch 20, in one embodiment, may be a 18x18 crossbar switch that allows system board sets 29(1-n) and system control boards 15(1-2) to communicate, if desired. Thus, the switch 20 may allow the two system control boards 15(1-2) to communicate with each other or with other system board sets 29(1-n), as well as allow the system board sets 29(1-n) to communicate with each other.

The system board sets 29(1-n), in one embodiment, comprise one or more boards, including a system board 30, an I/O board 35, and an expander board 40. The system board 30 may include processors and associated memories for executing, in one embodiment, applications, including portions of an operating system. The I/O board 35 may manage I/O cards, such as peripheral component interface cards and optical cards, that are installed in the system 10. The expander board 40, in one embodiment, generally acts as a multiplexer *(e.g.,* 2:1 multiplexer) to allow the system 10, system board 30, and I/O board 35 to interface with the switch 20, which, in some instances, may have only one slot for interfacing with both boards 30, 35.

In one embodiment, the system 10 may be dynamically subdivided into a plurality of system domains, where each domain may have a separate boot disk (to execute a specific instance of the operating system, for example), separate disk storage, network interfaces, and/or I/O interfaces. Each domain, for example, may operate as a separate machine that performs a variety of user-configured services. For example, one or more domains may be designated as an application server, a web server, database server, and the like. In one embodiment, each domain may run its own operating system *(e.g.,* Solaris operating system) and may be reconfigured without interrupting the operation of other domains.

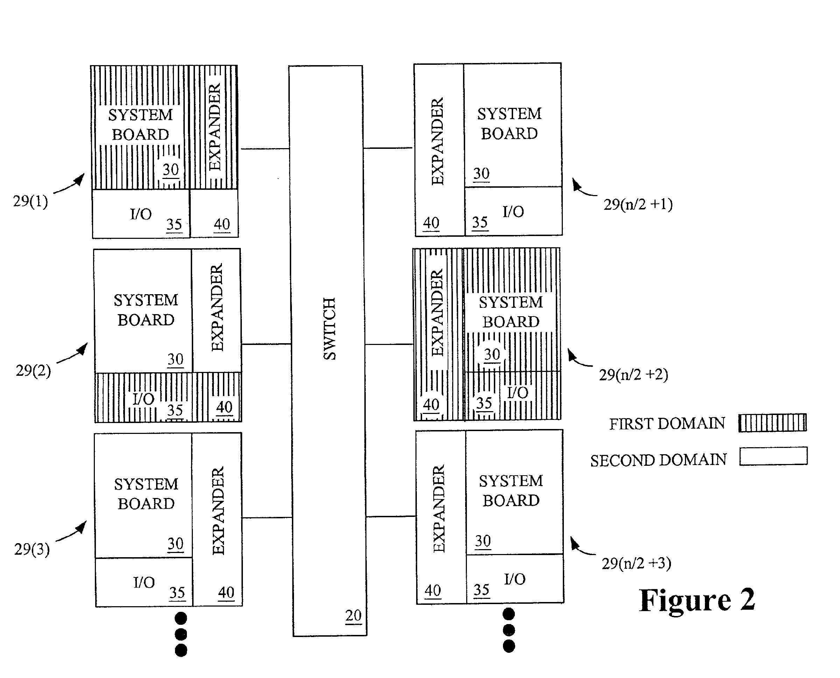

Figure 2 illustrates an exemplary arrangement where at least two domains are defined in the system 10. The first domain, identified by vertical cross-sectional lines, includes the system board set 29(n/2+2), the system board 30 of the system board set 29(1), and the I/O board 35 of the system board set 29(2). The second domain in the illustrated embodiment includes the system board sets 29(3), 29(n/2+1), and 29(n/2+3), as well as the I/O board 35 of the system board set 29(1) and the system board 30 of the system board set 29(2).

As shown, a domain may be formed of an entire system board set 29(1-n), one or more boards (*e.g.,* system board 30, I/O board 35) from selected system board sets 29(1-n), or a combination thereof. Although not necessary, it may be possible to define each system board set 29(1-n) as a separate domain. For example, if each system board set 29(1-n) were its own domain, the system 10 might conceivably have up to "n" (*i.e.,* the number of system board sets) different domains. When two boards (*e.g*., system board 30, I/O board 35) from the same system board set 29(1-n) are in different domains, such a configuration is referred to as a "split expander." The expander board 40 of the system board sets 29(1-n), in one embodiment, keeps the transactions separate for each domain. No physical proximity may be needed for boards in a domain.

Using the switch 20, inter-domain communications may be possible. For example, the switch 20 may provide a high-speed communications path so that data may be exchanged between the first domain and the second domain of Figure 2. In one embodiment, a separate path for data and address through the switch 20 may be used for inter-domain communications.

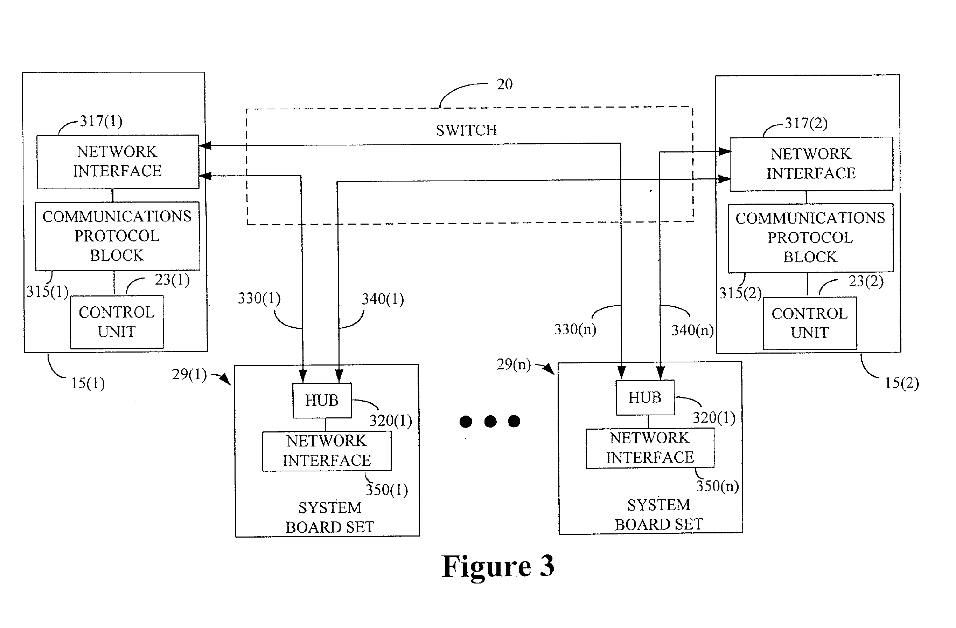

Referring now to Figure 3, an exemplary arrangement for managing network connections to one or more of the domains defined in the system 10 is illustrated. In the illustrated embodiment, each of the system control boards 15(1-2) includes a respective control unit 23(1-2) and communications protocol block 315(1-2). As explained earlier, the second system control board 15(2) serves as a back-up for the first system control board 15(1) by assuming control should the first system control board 15(1) fail. The exemplary arrangement of Figure 3 allows the second system control board 15(2) to communicate with one or more domains (comprising one or more system board sets 29(1-n) or selected portions thereof) in case of a malfunction in the first system control board 15(1).

The control units 23(1-2), in one embodiment, may be microprocessors that are coupled to the respective communications protocol blocks 315(1-2). The communications protocol blocks 315(1-2) may be a protocol layer for any one of a variety of industry-accepted standards, such as the I.E.E.E. 802.3 Ethernet standard, the I.E.E.E. 802.5 Token Ring standard, Transmission Control Protocol standard, asynchronous transfer mode (ATM) standard, and the like. In an alternative embodiment, the communications protocol blocks 315(1-2) may be a protocol layer for a private, or any other available, communications protocol. In one embodiment, the communications protocol blocks 315(1-2) may also include the device driver layer for the communications protocol that is employed.

The system control boards 15(1-2) may each include a respective network interface 317(1-2). The network interface 317(1-2) may be coupled to one or more system board sets 29(1-n), or a portion thereof, over connections 330(1-n) and 340(1-n), as shown. The network interface 317(1-2), in one embodiment, may be an application specific integrated circuit (ASIC) that provides a peripheral control interface (PCI) and an Ethernet interface, such as the RIO® ASIC provided by Sun® Microsystems. Accordingly, the network interfaces 317(1-2), in one embodiment, may perform conversions between PCI/Ethernet signals. For example, the network interface 317(1-2) may receive a PCI-formatted signal from the respective communications protocol block 315(1-2), convert it to an Ethernet format, and then transmit the signal to one of the system board sets 29(1-n). In one embodiment, the network interface 317(1-2) may include a plurality of RIO® ASICs, where at least one RIO® ASIC may interface with each system board set 29(1-n) or each configured domain.

In one embodiment, each system board set 29(1-n) includes a hub 320(1-n) that is coupled to the network interfaces 317(1-2) of the system control boards 15(1-2). Each system board set 29(1-n), in one embodiment, includes the hub 320(1-n) to allow communications with either one or both of the two system control boards 15(1-2). It should be appreciated that in implementations where a back-up system control board may not be desired, the use of the hubs 320(1-n) may be optional, as a hub may not be required to facilitate the transition from one system control board to another in case of a failure. Additionally, it should be noted that the hubs 320(1-n) may be situated in any desirable location on the system board set 29(1-n), including on the system board 30, the I/O board 35, or the expansion board 40 of the system board set 29(1-n). In the illustrated embodiment, each hub 320(1-n) is coupled to a respective network interface 350(1-n). In one embodiment, the network interfaces 350(1-n) may each include a RIO® ASIC.

In one embodiment, the system control board 15(1) may communicate with one or more of the system board sets 29(1-n) over connections 330(1-n). Similarly, in one embodiment, the alternative system control board 15(2) may communicate with one or more of the system board sets 29(1-n) over connections 340(1-n). The connections 330(1-n), 340(1-n) individually, or collectively, form a network, such as an Ethernet network, over which the active system control board 15(1-2) may manage or control one or more domains formed of one or more boards (e.g., system board 30, I/O board 35) of the system board sets 29(1-n). Each connection 330(1-n) or 340(1-n) may be a bi-directional, differential-pair link that runs between the system control board 15(1-2) and the system board sets 29(1-n) through the switch 20.

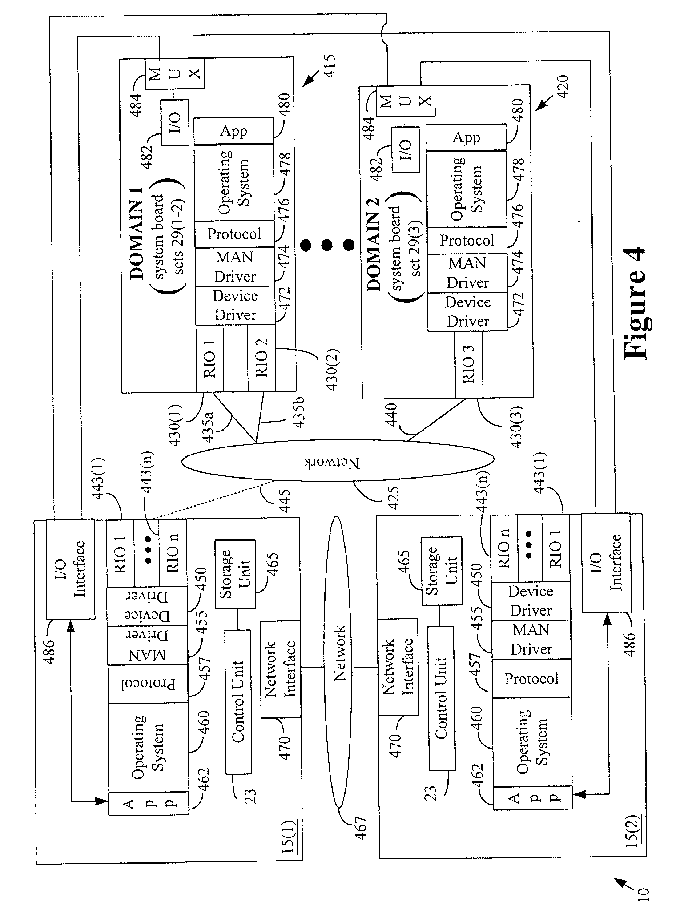

The connections 330(1-n) or 340(1-n), in one embodiment, may represent point-to-point links, which may not be easy for a system administrator to manage. Thus, in accordance with one or more embodiments of the present invention, a way of reducing the complexity of managing network connections 330(1-n), 340(1-n) to one or more domains is illustrated in Figure 4.

Figure 4 illustrates an exemplary configuration of the system 10 that includes two defined domains 415, 420 that are capable of being managed by either the first system control board 15(1) or the second system control board 15(2) over a first network 425. Although in the illustrated embodiment two domains 415, 420 are shown, in other embodiments, any other desirable number of domains may be configured or defined. As mentioned, a "domain" may be formed of one or more system board sets 29(1-n), one or more boards (*e*.*g*., system board 30, I/O board 35) from selected system board sets 29(1-n), or a combination thereof.

For ease of illustration, although not so limited, it is herein assumed that the first domain 415 comprises two system board sets 29(1-2) and the second domain 420 comprises one system board set 29(3). The number of underlying physical links or paths between the system control boards 15(1-2) and any given domain may depend on the number of RIO® ASICs 430(1-3) associated with that domain. For example, in the illustrated example, because the first domain 415 includes two system board sets 29(1-2), the first domain 415 comprises two RIO® ASICs 430(1-2) (one associated with each system board set 29(1-2)). Accordingly, there are two physical paths 435(a-b) (although generally only one of the two paths may be used during any given time) between the system control board 15(1-2) and the first domain 415. Similarly, because the second domain 420 in the illustrated example has one associated RIO® ASIC 430(3), there is one physical path 440 between the system control board 15(1-2) and the second domain 420. The manner in which the underlying physical links or paths 435(a-b), 440 between the system control board 15(1-2) and the domains 415, 420 are managed is described in more detail later, in accordance with one embodiment of the present invention.

Generally, the two system control boards 15(1-2) are substantially similar, and, as such, for ease of illustration, the interconnections of the second system control board 15(2) are not discussed in detail herein. The system control board 15(1-2), in one embodiment, includes a plurality of RIO® ASICs 443(1-n), at least one for interfacing with each of the defined domains 415, 420 in the system 10.

The one or more of the links (symbolically represented by dashed line 445 between the RIO® ASICs 443(1-n) on the system control board 15(1-2) and the RIO® ASICs 435(a-b), 440 of the domains 415, 420 form the first network 425 over which communications may occur. As utilized herein, the term "network" may be one or more communications networks, channels, links, or paths and systems or devices (such as routers) used to send data over such networks, channels, links, or paths.

The system control board 15(1-2) may include a device driver 450 for controlling the RIO® ASICs 443(1-n). In the illustrated embodiment, each RIO® ASIC 443(1-n) may be controlled by a separate instance of a device driver 450 executing in the system 10. The system control board 15(1-2) includes a management (MAN) driver 455 that interfaces with the RIO® ASICs 443(1-n) via the device driver 450. The MAN driver 455 of the system control board 15(1-2) manages the underlying physical links 445 that are used to communicate with the domains 415, 420.

Above the MAN driver 455 of the system control board 15(1-2) may be a network protocol stack 457, with one example being the Internet Protocol (IP), as described in Request for Comments (RFC) 791, entitled "Internet Protocol," dated September 1981, incorporated by reference herein in its entirety. Other versions of IP, such as IPv6, or other packet-based standards may also be utilized in further embodiments. A version of IPv6 is described in RFC 2460, entitled "Internet Protocol, Version 6 (IPv6) Specification," dated December 1998, incorporated by reference herein in its entirety. Packet-based networks such as IP networks communicate with packets, datagrams, or other units of data that are sent over the networks. Unlike circuit-switched networks, which provide a dedicated end-to-end connection or physical path for the duration of a call session, a packet-based network is one in which the same path may be shared by several network elements. In one embodiment, both inbound and outbound packets may be passed through the RIO® ASICs 443(1-n) and the network protocol stack 457.

Above the network protocol stack 457 may be an operating system layer 460. Examples of an operating system layer 460 may be the Solaris® operating system, Windows® operating system, UNIX® operating system, AIX® operating system, and the like. An application 462 may lie above the operating system layer 460, where the application 462, in one embodiment, interfaces with the RIO® ASICs 443(1-n) through one or more of the above-mentioned intermediate layers. For example, the application 462 may provide data, along with a destination address (*e*.*g*., such as an Ethernet destination address), for delivery to a domain associated with that destination address. The MAN driver 455 of the system control board 15(1-2), in one embodiment, indicates to the appropriate instance of the device driver 450 of the RIO® ASIC 443(1-n) to deliver the data to the appropriate domain 415, 420.

In the illustrated embodiment, the system control board 15(1-2) includes the control unit 23 coupled to a storage unit 465. The application 462, the operating system layer 460, the protocol stack 457, the MAN driver 455 of the system control board 15(1-2), and/or the device driver 450 may be stored in the storage unit 465.

The first and second system control board 15(1-2) in the illustrated embodiment are coupled by a second network 467. In one embodiment, each system control board 15(1-2) includes a network interface 470 for communicating with the second network 467. Although not shown, the network interface 470 of the system control boards 15(1-2) may include one or more RIO® ASICs, device drivers, and MAN drivers. The second network 467, for example, may be an Internet network.

The first and second domains 415, 420 in the illustrated embodiment include RIO® ASICs 430(1-2) and RIO® ASIC 430(3), respectively. In one embodiment, the first domain 415, which has more than one associated RIO® ASIC 430(1-2), may assign at least one of the two RIO® ASICs 430(1-2) for interfacing with the system control board 15(1-2) during any given moment. If desired, the first domain 415, in one embodiment, may dynamically change the RIO® ASIC 430(1-2) that interfaces with the system control board 15(1-2). The term "dynamically" may refer to performing one or more actions without rebooting, resetting, or reinitializing one or more domains or a portion of the system 10. The domains 415, 420 include a device driver 472 for controlling the respective RIO® ASICs 430(1-2) and 430(3). The domains 415, 420, in the illustrated embodiment, each include a management (MAN) driver 474 that interfaces with the respective RIO® ASICs 430(1-2) and 430(3) via the device driver 472. The MAN driver 474 of each domain 415, 420 manages the underlying physical links 435(a-b) and 440 that are used to communicate with the respective domains 415, 420.

Above the MAN driver 474 may be a network protocol stack 476, with one example being the Internet Protocol. Above the network protocol stack 476 may be an operating system layer 478. An application 480 may lie above the operating system layer 478, where the application 480, in one embodiment, interfaces with the respective RIO® ASICs 430(1-2) and 430(3) through one or more of the above-mentioned intermediate layers.

The domains 415, 420, in the illustrated embodiment, each include an I/O interface 482 coupled to a multiplexer (MUX) 484. The MUX 484 may allow the I/O interface 482 of each of the domains 415, 420 to communicate with an I/O interface 486 of the system control board 15(1-2). As described in more detail below, the I/O interface 482 of the domains 415, 420 may transmit and receive control signals to and from the I/O interface 486 of the system control board 15(1-2).

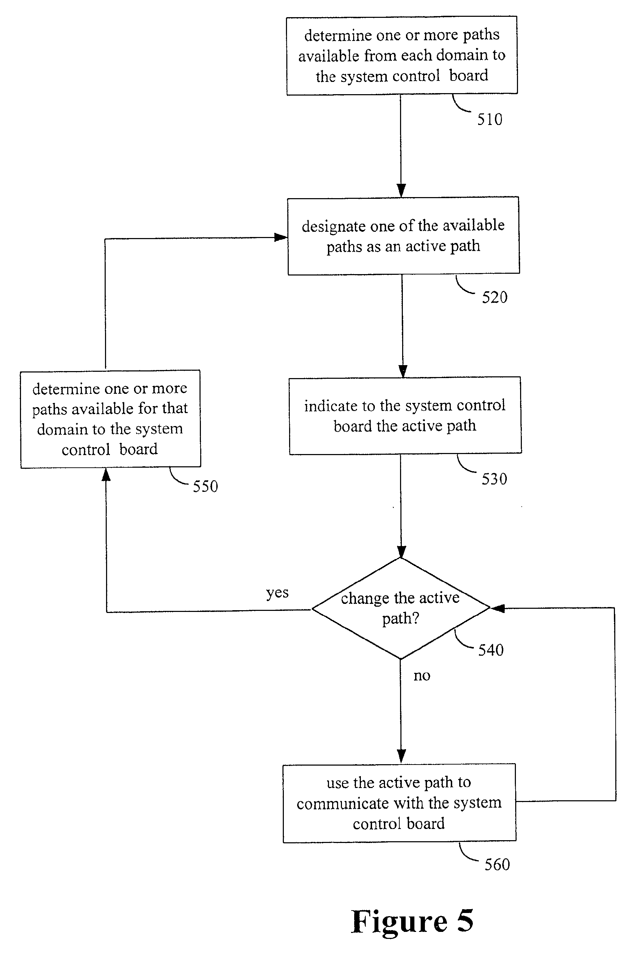

Referring now to Figure 5, a flow diagram of a method of one embodiment of the present invention is illustrated. The MAN driver 474 of each domain 415, 420 (see Figure 4) determines (at 510) one or more paths 435(a-b), 440 available from that domain to the system control board 15(1-2). In one embodiment, the MAN driver 474 of each domain 415, 420 may maintain a list of the one or more paths 435(a-b), 440 available for that domain. The one or more paths 435(a-b), 440 may represent the number of separate physical paths from each domain 415, 420 to the system control board 15(1-2). For example, as indicated above, each pair of RIO® ASICs (*e.g*., 443(1-n) and 430(10-2)/430(3)) between the domains 415, 420 and the system control board 15(1-2) may be considered a separate physical path. In the illustrated exemplary arrangement of Figure 4, two domains 415, 420 are shown configured, with the first domain 415 having two paths 435(a-b) and the second domain 420 having a single path 440 to the system control board 15(1-2). In one embodiment, each of the configured domains 415, 420 indicates to the MAN driver 474 of the system control board 15(1-2) the active path 435(a-b), 440 for that domain.

The MAN driver 474 of each domain 415, 420 designates (at 520) one of the available paths 435(a-b), 440 as an "active" path for that domain. The "active" path in the illustrated embodiment may be the path that is utilized for communications between the domain 415, 420 and the system control board 15(1-2). That is, the "active" path may be an operational or functional path over which communications may occur.

Each domain 415, 420 in the illustrated embodiment indicates (at 530) to the system control board 15(1-2) the active path 435(a-b), 440 that was designated (at 520) earlier. In one embodiment, each domain 415, 420 may use its I/O interface 482 to indicate the designated active path 435(a-b), 440 to the system control board 15(1-2). The system control board 15(1-2) may receive the designated active path 435(a-b), 440 via its I/O interface 486. Thereafter, the system control board 15(1-2) utilizes the designated active path 435(a-b), 440 from each domain 415, 420 to communicate with that domain.

In some instances it may be desirable to change the designated active path from a given domain to the system control board 15(1-2). For example, the designated active path may have an error (because of a faulty RIO® ASIC 430(1-2)/ 440 or for some other reason), and thus it may be desirable to alter the designated active path. As an additional reason, an administrator may desire to remove selected components (e.g., boards, RIO® ASICs) from the system 10. The removal of these selected components may affect the designated active path, and, as such, it may be desirable to change the designated active path. If it is desirable (at 540) to change the designated active path, then the MAN driver 474 determines (at 550) one or more paths 435(a-b), 440 available from that domain 415, 420 to the system control board 15(1-2). Based on the available paths 435(a-b), 440, the MAN driver 474 designates (at 520) one active path and then indicates (at 530) to the system control board 15(1-2) the active path. The above loop may be repeated whenever it is desirable to change the active path.

If it is not desirable (at 540) to change the active path, then the designated active path is used for communications between the system control board 15(1-2) and the given domain 415, 420. A loop is provided to determine if anytime during communications a change in the active path is desired (at 540). However, if it is desirable (at 540) to alter the designated active path, then, in one embodiment, the above-described process may be used to designate a new active path.

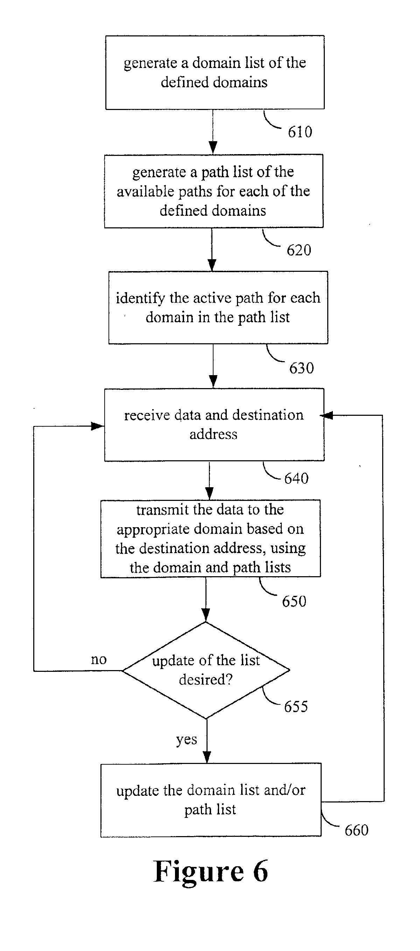

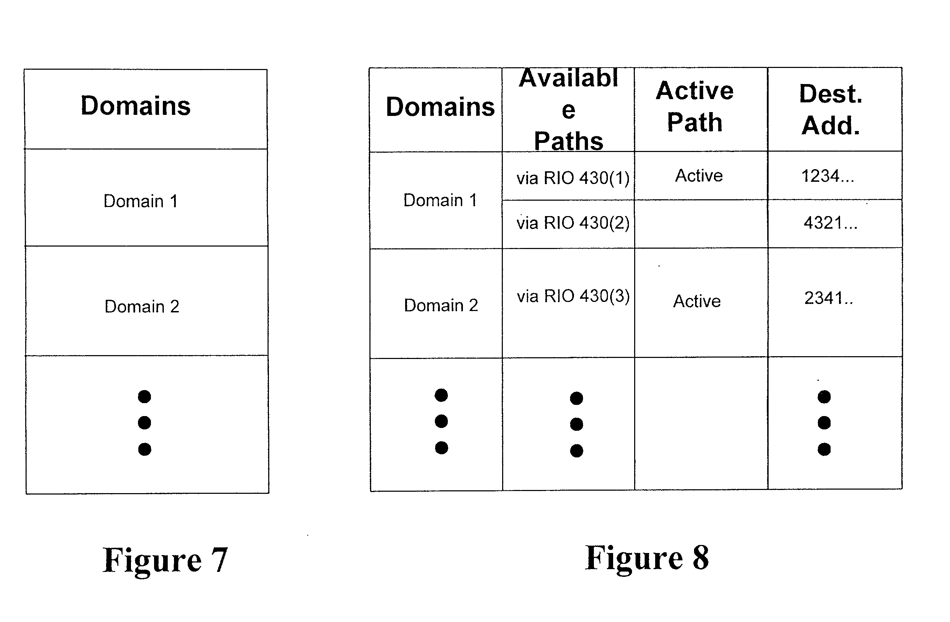

Referring now to Figure 6, a flow diagram of a method of one embodiment of the present invention is illustrated. The MAN driver 455 of the system control board 15(1-2) generates (at 610) a domain list of the domains 415, 420 that are defined in the system 10. The term "list," as utilized herein, may include any data structure, files, tables, records, databases, and the like in which information may stored and accessed. In one embodiment, the MAN driver 455 of the system control board 15(1-2) may determine which domains are defined based on the information provided by the domains 415, 420 themselves. For example, in the illustrated exemplary arrangement of Figure 4, the domain list generated by the MAN driver 455 of the system control board 15(1-2) may contain two entries, one for each domain 415, 420. An exemplary domain list is shown in Figure 7.

Referring again to Figure 6, the MAN driver 455 of the system control board 15(1-2) generates (at 620) a path list for each defined domain. In one embodiment, the path list may contain one or more physical paths (on a domain by domain basis) over which information may be transmitted and received by the system control board 15(1-2). An exemplary path list with respect to Figure 4 is shown in Figure 8. The MAN driver 455 of the system control board 15(1-2) identifies (at 630) an active path (see Figure 8) from the path list for each defined domain 415, 420 over which communications may occur.

It should be noted that although in the illustrated embodiment a separate domain list and path list are shown in Figures 7 and 8, in an alternative embodiment the contents of the these lists may be integrated into a single list. Alternatively, more than two lists may also be utilized to store the relevant information. Other embodiments of the lists may include additional or fewer entries, depending on the implementation.

The MAN driver 455 of the system control board 15(1-2) may receive (at 640) data and an associated destination address for transmission to the appropriate domain. The MAN driver 455 of the system control board 15(1-2), via the device driver 450 and at least one of the RIO® ASICs 443(1-n), transmits (at 650) the data to the appropriate domain based on the destination address using the domain and the path lists. That is, based on the destination address, the MAN driver 455 of the system control board 15(1-2) may identify the appropriate domain from the domain list (see Figure 7), and once the appropriate domain is identified, it uses the path list to determine the active path over which the data is transmitted to the identified domain.

In some instances, the system administrator may wish to reconfigure the system 10. Such a reconfiguration, however, may affect the domains and path lists generated (at 610 and 620) by the MAN driver 455 of the system control board 15(1-2), and, as such, these lists may need to be updated. For example, the system administrator may wish to add or remove a domain from the system 10, which would make it desirable to update the domain list. As an additional example, if a configuration of a domain is changed such that the underlying physical path is altered, it may be desirable to update the path list to reflect such a change.

If it is determined that an update to the domain list and/or path list is desired (at 655), the MAN driver 455 of the system control board 15(1-2) updates (at 660) the domain list and/or path list accordingly. The path list may be updated for a variety of reasons. For example, the underlying paths between a given domain and the system control board 15(1-2) may have changed because addition or deletion of components (*e*.*g*., boards, RIO® ASICs) in the domains 415, 420. Similarly, if the number of domains defined in the system 10 has changed, the domain list may be updated (at 660) accordingly to reflect such changes. Once the domain list and/or path list is updated, the data received (at 640) may be transmitted (at 650) to the appropriate domain 415, 420. If, however, no update to the domain and/or path lists is desired (at 655), then, in one embodiment, the data received (at 640) is transmitted (at 650) until an update to at least one of the lists is desired (at 655).

The MAN driver 455 of the system control board 15(1-2) and the MAN driver 474 of the domains 415, 420 may keep communications between the system control board 15(1-2) and each domain 415, 420 separate and secure. For example, from the perspective of the domains 415, 420, the first domain 415 is unaware of the presence of the second domain 420 (or any other domain) on the first network 425, and vice-versa. That is, the MAN driver 474 of the domains 415, 420, in one embodiment, does not allow domains 415, 420 to snoop each others data packets. In contrast, from the perspective of the system control boards 15(1-2), the MAN driver 455 of the system control board 15(1-2) allows the system control board 15(1-2) to communicate with all of the defined domains 415, 420 over the first network 425. Thus, in one embodiment, the system control board 15(1-2) is aware of all of the domains 415, 420 on the first network 425, while the domains 415, 420 themselves are aware of the system control board 15(1-2) but not of each other. This, in effect, creates a secure connection between the system control board 15(1-2) and each domain 415, 420.

The various system layers, routines, or modules may be executable control units (such as control unit 23(1-2) (see Figure 1). Each control unit 23(1-2) may include a microprocessor, a microcontroller, a digital signal processor, a processor card (including one or more microprocessors or controllers), or other control or computing devices.

The storage devices referred to in this discussion may include one or more machine-readable storage media for storing data and instructions. The storage media may include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy, removable disks; other magnetic media including tape; and optical media such as compact disks (CDs) or digital video disks (DVDs). Instructions that make up the various software layers, routines, or modules in the various systems may be stored in respective storage devices. The instructions when executed by a respective control unit cause the corresponding system to perform programmed acts.

The instructions can be provided as one or more computer programs, routines, modules, software layers, etc. on one or more carrier media. Suitable carrier media include a storage medium such as, by way of example only, optical, magneto optical, magnetic, solid state, tape or disk storage media, or a transmission medium such as, by way of example only, wired, wireless, optical or electromagnetic media forming part, for example, of a network, point to point, or broadcast communications medium.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope of the invention.

## Claims

1. An apparatus, comprising:
a storage unit adapted to store a domain list and a path list, wherein the domain list comprises a domain defined in a system and the path list comprises one or more paths available for communications with the domain; and
a control unit communicatively coupled to the storage unit, the control unit adapted to determine an active path from the one or more available paths and to transmit data to the domain over the active path.

2. The apparatus of claim 1, wherein the control unit is adapted to receive data from the domain over the active path.

3. The apparatus of claim 1 or claim 2, wherein the control unit is adapted to dynamically determine if it is desirable to change the active path.

4. The apparatus of claim 3, wherein the control unit is adapted to alter the active path to a different path from the one or more available paths in response to determining that it is desirable to change the active path.

5. The apparatus of claim 3, wherein the control unit alters the active path to the different path based on an indication from the domain.

6. The apparatus of claim 3, wherein the control unit is adapted to update the path list in response to determining that it is desirable to change the active path

7. The apparatus of any preceding claim, wherein the domain list comprises a plurality of domains defined in the system and wherein the path list comprises one or more paths available for communications with the plurality of domains.

8. The apparatus of claim 7, wherein the control unit is adapted to identify an active path for each of the plurality of domains based on the path list.

9. The apparatus of claim 7, wherein the control unit is adapted to transmit data to the plurality of domains over the active path.

10. A method, comprising:
determining one or more domains defined in a processor-based system;
determining one or more available paths to the one or more defined domains;
determining at least one active path from the one or more available paths to each of the defined domains; and
transmitting data to at least one of the defined domains over the active path.

11. The method of claim 10, wherein determining one or more of the defined domains comprises generating a domain list identifying one or more of the defined domains.

12. The method of claim 10 or claim 11, wherein determining one or more of the available paths comprises generating a path list identifying one or more of the available paths.

13. The method of claim 12, wherein generating the path list comprises receiving the one or more available paths from the one or more of the defined domains.

14. The method of claim 12, wherein receiving at least one active path comprises receiving an active path from each of the defined domains identifying the active path for that domain.

15. The method of any of claims 10 to 14, further comprising receiving data from at least one of the defined domains over the active path.

16. The method of any of claims 10 to 15, further comprising preventing inter-domain communication.

17. The method of any of claims 10 to 16, further comprising dynamically determining if it is desirable to alter the at least one active path.

18. The method of claim 17, further comprising dynamically altering the at least one active path in response to determining that it is desirable to alter the at least one active path.

19. An article comprising instructions that when executed enable a processor to:
determine a domain configured in a processor-based system;
determine one or more available paths to the configured domain;
determine at least one active path from the one or more available paths to the configured domains; and
transmitting data to the configured domain over the active path.

20. The article of claim 19, wherein the instructions when executed enable the processor to generate a domain list identifying the configured domain.

21. The article of claim 19 or claim 20, wherein the instructions when executed enable the processor to generate a path list identifying one or more of the available paths.

22. The article of claim 21, wherein the instructions when executed enable the processor to receive data from the configured domain over the active path.

23. The article of any of claims 19 to 22, wherein the instructions when executed enable the
processor to dynamically determine if it is desirable to alter the active path.

24. The article of claim 23, wherein the instructions when executed enable the processor to dynamically alter the at least one active path in response to determining that it is desirable to alter the active path.

25. The article of any of claims 19 to 24 on a carrier medium.
